# EUROPEAN PATENT SPECIFICATION

(11) **EP 2 162 011 B1**
(45) Date of publication and mention of the grant of the patent: **09.03.2011**
(21) Application number: 08766864.6
(22) Date of filing: 02.07.2008
(51) Int. Cl.: A23D 9/00, A23C 11/02, A23C 19/09, A23C 20/00, A23L 1/29, A23L 1/30

(54) **VEGETABLE FAT BLEND AND EDIBLE PRODUCTS CONTAINING SUCH A FAT BLEND**
PFLANZENFETTMISCHUNG UND ESSWAREN, DIE SOLCH EINE FETTMISCHUNG ENTHALTEN
MÉLANGE DE GRAISSES VÉGÉTALES ET PRODUITS COMESTIBLES CONTENANT CE MÉLANGE DE GRAISSES

(30) Priority: 02.07.2007 EP 07111494
(43) Date of publication of application: 17.03.2010
(73) Proprietor: Sime Darby Malaysia Berhad, Kuala Lumpur, 50350 (MY)
(72) Inventor: ZIEVERINK, Martinus Mathilda Pieter, NL-2613 RM Delft (NL); DE RUITER, Gerhard Adriaan, NL-5473 JE Heeswijk-Dinther (NL)
(74) Representative: Swinkels, Bart Willem
(86) International application number: PCT/NL2008/050441
(87) International publication number: WO 2009/005351

(56) References cited:
- EP-A- 1 474 991
- WO-A-03/000062
- US-A1- 2002 132 035

## Description

### TECHNICAL FIELD OF THE INVENTION

The present invention relates to a vegetable fat blend and to edible products containing such a fat blend. More particularly, the present invention provides a vegetable fat blend that can suitably be used to replace milk fat in processed food products or to prepare imitation dairy products.

### BACKGROUND OF THE INVENTION

Milk fat is widely used in the food industry in the preparation of a variety of processed edible products, such as bakery products, ice cream, desserts and milk shakes. In addition, there exists a wide range of dairy products containing substantial levels of milk fat, e.g. cheese, cream and milk.

From a nutritional perspective it is desirable that a major part of the fat intake consists of oils and fats that contain low levels of saturated and trans-unsaturated fatty acids. Since milk fat contains high levels of saturated fatty acids and also considerable levels of trans-unsaturated fatty acids, it is desirable that only a minor fraction of the fat in an individual's diet it provided by milk fat. Unfortunately, however, in a typical Western diet a large fraction of the fat intake is provided by dairy products and processed edible products that contain appreciable levels of milk fat.

Hence, it would be desirable to replace the milk fat in these dairy products and processed edible products by a fat with a more favourable nutritional profile, in particular a more desirable fatty acid profile.

In the prior art many examples can be found of processed foodstuffs and dairy products in which milk fat has been replaced by vegetable oils. A problem associated with the use of vegetable oils is the inherent oxidative instability of these oils which is correlated with the unsaturated fatty acid content and the level of unsaturation of the fatty acids (polyunsaturated fatty acids being much more sensitive than mono-unsaturated fatty acids).

Another issue associated with the replacement of milk fat by vegetable oils concerns the melting behaviour of the fat. Milk fat contains a substantial level of solid fat at ambient temperature (20 °C), but almost no solid fat at body temperature. The melting profiles of the most common vegetable fats are quite different from those of milk fat and as a result the sensory properties of products based on vegetable oil are often quite different from those of their dairy counterparts. It is known that a vegetable fat based product with a melting profile similar to that of milk fat can be obtained by employing a blend of different vegetable fats, including hydrogenated vegetable fat components. However, the use of hydrogenated oils in edible products is increasingly regarded as undesirable.

Milk fat naturally contains fat soluble yellow colouring substances that impart a yellowish colour to the products in which the milk fat is applied. In contrast, refined vegetable oils are essentially colourless. Hence, in order to successfully mimic the colour contribution of milk fat, a yellow colouring must be added in case the milk fat is replaced by a vegetable oil. Food and beverage manufacturers, however, prefer not to use colouring agents.

### SUMMARY OF THE INVENTION

The inventors have developed a vegetable fat blend that can suitably be used to replace milk fat in processed edible products as well as dairy products. The vegetable fat blend according to the invention offers the advantage that it contains much less saturated fatty acids than milk fat. Furthermore, despite the high level of unsaturated fatty acids contained therein, the present vegetable fat blend exhibits an exceptionally high oxidative stability. Finally, the melting behaviour as well as the colour of the vegetable fat blend of the present invention are very similar to those of milk fat.

The vegetable fat blend according to the present invention is characterised in that it contains:
- 0.5-15 wt.% of red palm oil;
- 15-75 wt.% of a highly unsaturated oil selected from the group consisting of sunflower oil, soybean oil, rapeseed oil, cottonseed oil, safflower oil, marine oil, corn oil, olive oil, linseed oil and combinations thereof; and
- 25-60 wt.% of a structuring fat selected from the group consisting of palm oil, palm oil fractions, lauric fat, lauric fat fractions, fully hydrogenated vegetable oil, and combinations thereof;
wherein the red palm oil contains at least 200 ppm of carotenoids and 200 ppm of tocotrienols.

The invention also relates to an edible product having a fat content of at least 15% by weight of dry matter, said fat consisting of 0-40 wt.% of dairy fat and 60-100 wt.% of the vegetable fat blend as defined above.

### DETAILED DESCRIPTION OF THE INVENTION

Accordingly, one aspect of the invention relates to a vegetable fat blend containing:
- 0.5-15 wt.% of red palm oil;
- 15-75 wt.% of a highly unsaturated oil selected from the group consisting of sunflower oil, soybean oil, rapeseed oil, cottonseed oil, safflower oil, marine oil, corn oil, olive oil, linseed oil and combinations thereof; and
- 25-60 wt.% of a structuring fat selected from the group consisting of palm oil, palm oil fractions, lauric fat, lauric fat fractions, fully hydrogenated vegetable oil, and combinations thereof;
wherein the red palm oil contains at least 200 ppm of carotenoids and 200 ppm of tocotrienols.

Here the term "red palm oil" relates to a palm oil or palm oil fraction containing the colouring substances naturally present in unrefined palm oil. The red palm oil may suitably have been submitted to mild refining, such as deodorisation. According to a preferred embodiment, the red palm oil is an olein fraction, most preferably a super olein fraction of palm oil.

The terms "oil" and "fat" are deemed to be synonyms and encompass lipids such as triglycerides, diglycerides, monoglycerides, phosphoglycerides etc. Most preferably, the oil (or fat) employed in accordance with the present invention is a triglyceride fat.

The term "edible product" as used herein encompasses food products (including imitation dairy products), beverages (including e.g. imitation milk) and nutritional preparations.

The term "fatty acid" as used herein encompasses fatty acid residues contained, for instance, in triglycerides.

The N-value Nₜ equals the solid fat content of a fat at a temperature of t °C as measured by means of ISO 8292 - Animal and vegetable fats and oils - Determination of solid fat content - Pulsed nuclear magnetic resonance method.

Unless indicated otherwise, fatty acid concentrations are expressed as a percentage of the total weight of fatty acid residues and free fatty acids contained in the fat. The fatty acid concentrations are suitably determined by means of ISO 5509 - Animal and vegetable fats and oils - Preparation of methyl esters of fatty acids and ISO 5508 - Animal and vegetable fats and oils - Analysis by gas chromatography of methyl esters of fatty acids.

The triglyceride composition of fats, unless indicated otherwise, is determined by HPLC silver ion chromatography.

According to a preferred embodiment, the vegetable fat blend of the present invention has a saturated fatty acid content of 25-45 wt.%. It was found that in order to achieve the desired melting behaviour it is advantageous to employ a fat blend containing at least 25 wt.% of saturated fatty acids.

The melting profile of a fat blend can suitably be characterised by the solid fat content of the blend at different temperatures. The vegetable fat blend of the present invention is preferably characterised by the following solid fat profile:
- 20%≤N10≤45%;
- 2% ≤N₂₀≤ 20%; and
- 0% ≤N₃₀≤ 5%.

In according with another preferred embodiment, the vegetable fat blend contains from 15-55 wt.% of triglycerides selected from the group consisting of HHU triglycerides, HUH triglycerides, HHH triglycerides and combinations thereof, wherein H represents palmitic acid or stearic acid and wherein U represents oleic acid, linoleic acid or linolenic acid.

The present vegetable fat blend advantageously contains a significant amount of palm oil or a palm oil fraction. Palm oil and palm oil fractions are characterised by a relatively high ration of HUH:HHU triglycerides. Hence, in a preferred embodiment, said fat blend contains HUH triglycerides and HHU triglycerides in a weight ratio HUH : HHU of more than 4.5 : 1.

In order to achieve a high level of unsaturated fatty acids in the present fat blend it is advantageous to employ a highly unsaturated oil that contains a high level of tri-unsaturated fatty acids. Accordingly, the vegetable fat blend preferably contains from 10-65 wt.% of UUU triglycerides.

In the vegetable fat blend UUU triglycerides, HUH triglycerides, HHU triglycerides and HHH triglycerides together typically represent at least 55 wt.% of the vegetable fat blend.

It was found that the oxidative stability of the present vegetable fat blend is greatly improved if the blend contains a small amount of lauric fat Accordingly, the vegetable fat blend advantageously contains 2-20 wt.% of a lauric fat component selected from the group consisting of coconut oil, palm kernel oil, coconut oil fractions, palm kernel oil fractions and combinations thereof.

The nutritional value of the present vegetable fat blend may be further enhanced by including therein an oil that contains appreciable levels of ω3 polyunsaturated fatty acids. In accordance with a particularly preferred embodiment, the vegetable fat blend contains at least 1 wt.%, preferably at least 5 wt.% of an ω3 oil selected from the group consisting of linseed oil, marine oil and combinations thereof. Most preferably, said ω3 oil is linseed oil.

In accordance with another preferred embodiment the present vegetable fat blend contains ω3 fatty acids and ω6 fatty acids in a weight ratio ω3 : ω6 of 1:1 to 10:1

The highly unsaturated oil in the present fat blend is preferably selected from the group consisting of sunflower oil, soybean oil, rapeseed oil, cottonseed oil, safflower oil, corn oil and combinations thereof. Most preferably, the highly unsaturated oil is selected from the group consisting of sunflower oil, soybean oil and combinations thereof.

The structuring fat employed in accordance with the present invention is advantageously selected from the group consisting of palm oil or palm oil fractions. Most preferably, the structuring fat is a palm oil mid fraction, preferably a palm oil mid fraction having an iodine value between 37-45.

The present vegetable fat blend offers the advantage that it can be prepared without using hydrogenated fats. As a result, the present vegetable fat blend typically contains less than 2 wt.%, preferably less than 1 wt.% of trans-unsaturated fatty acids. According to another preferred embodiment, the vegetable fat blend does not contain hydrogenated fat.

Another aspect of the present invention relates to an edible product having a fat content of at least 15% by weight of dry matter, said fat consisting of 0-40 wt.% of dairy fat and 60-100 wt.% of the vegetable fat blend as defined herein before.

According to a particularly preferred embodiment, the fat contained in the edible product consists of 0-10 wt.% of dairy fat and 90-100 wt.% of the vegetable fat blend.

Examples of edible products in which the vegetable fat blend of the present invention can advantageously be applied include cheese, milk, cream, bakery fat, bakery margarine, ice cream, desserts, milkshakes and coffee creamer.

According to a particularly preferred embodiment, the edible product is an imitation dairy product having a fat content of 15-95%, preferably of 25-65% and even more preferably of 35-55% by weight of dry matter.

An important advantage of the present vegetable fat blend resides in the fact that it contains natural colouring. Thus, the present vegetable fat blend can be used to replace milk fat without there being a need to additionally add a colouring, notably a colouring such as annatto colouring.

According to a particularly preferred embodiment, the edible product of the present invention is an imitation cheese product. It was found that excellent imitation cheese can be made from imitation milk in which the milk fat has been replaced by the vegetable fat blend of the present invention. The cheese product so obtained has a favourable fatty acid profile, does not develop oxidation off-flavours during ripening and storage and is comparable to a diary cheese in terms of taste, mouthfeel and appearance. Most preferably, the edible product of the present invention is a hard or semi-hard cheese.

## Claims

1. A vegetable fat blend containing:
- 0.5-15 wt.% of red palm oil;
- 15-75 wt.% of a highly unsaturated oil selected from the group consisting of sunflower oil, soybean oil, rapeseed oil, cottonseed oil, safflower oil, marine oil, corn oil, olive oil, linseed oil and combinations thereof; and
- 25-60 wt.% of a structuring fat selected from the group consisting of palm oil, palm oil fractions, lauric fat, lauric fat fractions, fully hydrogenated vegetable oil, and combinations thereof;
wherein the red palm oil contains at least 200 ppm of carotenoids and 200 ppm of tocotrienols.

2. Vegetable fat blend according to claim 1, having a saturated fatty acid content of 25-45 wt.%.

3. Vegetable fat blend according to claim 1 or 2, wherein the vegetable fat blend is **characterised by** the following solid fat profile:
- 20% ≤ N₁₀ ≤ 45%;
- 2% ≤ N₂₀ ≤ 20%; and
- 0% ≤ N₃₀ ≤ 5%.

4. Vegetable fat blend according to any one of the preceding claims, containing from 15-55 wt.% of triglycerides selected from the group consisting of HHU triglycerides, HUH triglycerides, HHH triglycerides and combinations thereof, wherein H represents palmitic acid or stearic acid and wherein U represents oleic acid, linoleic acid or linolenic acid.

5. Vegetable fat blend according to any one of the preceding claims, containing HUH triglycerides and HHU triglycerides in a weight ratio HUH : HHU of more than 4.5 : 1.

6. Vegetable fat blend according to any one of the preceding claims, wherein UUU triglycerides, HUH triglycerides, HHU triglycerides and HHH triglycerides together represent at least 55 wt.% of the vegetable fat blend.

7. Vegetable fat blend according to any one of the preceding claims, containing 2-20 wt.% of a lauric fat component selected from the group consisting of coconut oil, palm kernel oil, coconut oil fractions, palm kernel oil fractions and combinations thereof.

8. Vegetable fat blend according to any one of the preceding claims, wherein the highly unsaturated oil selected from the group consisting of sunflower oil, soybean oil, rapeseed oil, cottonseed oil, safflower oil, corn oil and combinations thereof.

9. Vegetable fat blend according to any one of the preceding claims, wherein the structuring fat is selected from the group consisting of palm oil or palm oil fractions.

10. Vegetable fat blend according to claim 9, wherein the structuring fat is a palm oil mid fraction having an iodine value between 37-45.

11. Vegetable fat blend according to any one of the preceding claims, having a trans-unsaturated fatty acid content of less than 2 wt.%.

12. An edible product having a fat content of at least 15% by weight of dry matter, said fat consisting of 0-40 wt.% of dairy fat and 60-100 wt.% of the vegetable fat blend defined in any one of the preceding claims.

13. Edible product according to claim 12, wherein the edible product is selected from the group consisting of cheese, milk, cream, bakery fat, bakery margarine, ice cream, desserts, milkshakes and coffee creamer.

14. Edible product according to claim 13, wherein the edible product is an imitation dairy product having a fat content of 15-95%, preferably of 25-65% and even more preferably of 35-55% by weight of dry matter.

15. Edible product according to claim 14, wherein the imitation dairy product is an imitation cheese product.

## Patentansprüche

1. Pflanzenfettmischung enthaltend:
- 0,5 - 15 Gew.-% rotes Palmöl;
- 15 - 75 Gew.-% eines hoch ungesättigten Öls, ausgewählt aus der Gruppe bestehend aus Sonnenblumenöl, Sojabohnenöl, Rapsöl, Baumwollsamenöl, Safloröl, Marineöl, Maisöl, Olivenöl, Leinöl und Kombinationen davon; und
- 25 - 60 Gew.-% eines strukturierenden Fetts, ausgewählt aus der Gruppe bestehend aus Palmöl, Palmölfraktionen, Laurinfett, Laurinfettfraktionen, vollständig hydriertem Pflanzenöl und Kombinationen davon;
wobei das rote Palmöl wenigstens 200 ppm Carotenoide und 200 ppm Tocotrienole enthält.

2. Pflanzenfettmischung nach Anspruch 1 mit einem Gehalt an gesättigter Fettsäure von 25 - 45 Gew.-%.

3. Pflanzenfettmischung nach Anspruch 1 oder 2, wobei die Pflanzenfettmischung **gekennzeichnet ist durch** das folgende Festfettprofil:
- 20% ≤ N₁₀ ≤ 5%;
- 2 % ≤ N₂₀ ≤ 20 %; und
- 0% ≤ N₃₀ ≤ 5%.

4. Pflanzenfettmischung nach einem der vorangehenden Ansprüche, enthaltend 15 - 55 Gew.-% Triglyceride ausgewählt aus der Gruppe bestehend aus HHU-Triglyceriden, HUH-Triglyceriden, HHH-Triglyceriden und Kombinationen davon, wobei H Palmitinsäure oder Stearinsäure bedeutet und wobei U Ölsäure, Linolsäure oder Linolensäure bedeutet.

5. Pflanzenfettmischung nach einem der vorangehenden Ansprüche, enthaltend HUH-Triglyceride und HHU-Triglyceride in einem Gewichtsverhältnis HUH:HHU von mehr als 4,5:1.

6. Pflanzenfettmischung nach einem der vorangehenden Ansprüche, wobei UUU-Triglyceride, HUH-Triglyceride, HHU-Triglyceride und HHH-Triglyceride zusammen wenigstens 55 Gew.-% der Pflanzenfettmischung darstellen.

7. Pflanzenfettmischung nach einem der vorangehenden Ansprüche, enthaltend 2 - 20 Gew.-% einer Laurinfettkomponente, ausgewählt aus der Gruppe bestehend aus Kokosöl, Palmkernöl, Kokosölfraktionen, Palmkernölfraktionen und Kombinationen davon.

8. Pflanzenfettmischung nach einem der vorangehenden Ansprüche, wobei das hoch ungesättigte Öl ausgewählt ist aus der Gruppe bestehend aus Sonnenblumenöl, Sojabohnenöl, Rapsöl, Baumwollsamenöl, Safloröl, Maisöl und Kombinationen davon.

9. Pflanzenfettmischung nach einem der vorangehenden Ansprüche, wobei das strukturierende Fett ausgewählt ist aus der Gruppe bestehend aus Palmöl oder Palmölfraktionen.

10. Pflanzenfettmischung nach Anspruch 9, wobei das strukturierende Fett eine Palmölmittelfraktion mit einer Iodzahl zwischen 37 - 45 ist.

11. Pflanzenfettmischung nach einem der vorangehenden Ansprüche mit einem Gehalt an trans-ungesättigter Fettsäure von weniger als 2 Gew.-%.

12. Essbares Produkt mit einem Fettgehalt von wenigstens 15 Gew.%, bezogen auf die Trockensubstanz, wobei das Fett aus 0 - 40 Gew.-% Milchfett und 60 - 100 Gew.-% der Pflanzenfettmischung besteht, die in einem der vorangehenden Ansprüche definiert ist.

13. Essbares Produkt nach Anspruch 12, wobei das essbare Produkt ausgewählt ist aus der Gruppe bestehend aus Käse, Milch, Sahne, Backfett, Backmargarine, Eiscreme, Desserts, Milchshakes und Kaffeesahne.

14. Essbares Produkt nach Anspruch 13, wobei das essbare Produkt ein Milchproduktimitat mit einem Fettgehalt von 15 - 95 Gew.-%, vorzugsweise 25 - 65 Gew.-% und noch mehr bevorzugt 35 - 55 Gew.-%, bezogen auf die Trockensubstanz, ist.

15. Essbares Produkt nach Anspruch 14, wobei das Milchproduktimitat ein Käseproduktimitat ist.

## Revendications

1. Mélange de matières grasses végétales, contenant :
- 0,5 à 15 % en poids d'huile de palme rouge ;
- 15 à 75 % en poids d'une huile hautement insaturée choisie dans le groupe consistant en l'huile de tournesol, l'huile de soja, l'huile de colza, l'huile de graines de cotonnier, l'huile de carthame, l'huile marine, l'huile de maïs, l'huile d'olive, l'huile de graines de lin et leurs associations ; et
- 25 à 60 % en poids d'une matière grasse structurante choisie dans le groupe consistant en l'huile de palme, des fractions d'huile de palme, la matière grasse laurique, des fractions de matière grasse laurique, une huile végétale totalement hydrogénée et leurs associations ;
dans lequel l'huile de palme rouge contient au moins 200 ppm de caroténoïdes et 200 ppm de tocotriénols.

2. Mélange de matières grasses végétales suivant la revendication 1, ayant une teneur en acides gras saturés de 25 à 45 % en poids.

3. Mélange de matières grasses végétales suivant la revendication 1 ou 2, ledit mélange de matières grasses végétales étant **caractérisé par** le profil suivant en matières grasses solides :
- 20 % ≤ N₁₀ ≤ 45 % ;
- 2 % ≤ N₂₀ ≤ 20 % ; et
- 0 % ≤ N₃₀ ≤ 5 %.

4. Mélange de matières grasses végétales suivant l'une quelconque des revendications précédentes, contenant 15 à 55 % en poids de triglycérides choisis dans le groupe consistant en triglycérides HHU, triglycérides HUH, triglycérides HHH et leurs associations, dans lesquels H représente l'acide palmitique ou l'acide stéarique et dans lesquels U représente l'acide oléique, l'acide linoléique ou l'acide linolénique.

5. Mélange de matières grasses végétales suivant l'une quelconque des revendications précédentes, contenant des triglycérides HUH et des triglycérides HHU en un rapport pondéral HUH:HHU supérieur à 4,5:1.

6. Mélange de matières grasses végétales suivant l'une quelconque des revendications précédentes, dans lequel les triglycérides UUU, les triglycérides HUH, les triglycérides HHU et les triglycérides HHH représentent conjointement au moins 55 % en poids du mélange de matières grasses végétales.

7. Mélange de matières grasses végétales suivant l'une quelconque des revendications précédentes, contenant 2 à 20 % en poids d'un constituant du type matière grasse laurique choisi dans le groupe consistant en l'huile de coprah, l'huile de palmiste, des fractions d'huile de coprah, des fractions d'huile de palmiste et leurs associations.

8. Mélange de matières grasses végétales suivant l'une quelconque des revendications précédentes, dans lequel l'huile hautement insaturée est choisie dans le groupe consistant en l'huile de tournesol, l'huile de soja, l'huile de colza, l'huile de graines de cotonnier, l'huile de carthame, l'huile de maïs et leurs associations.

9. Mélange de matières grasses végétales suivant l'une quelconque des revendications précédentes, dans lequel la matière grasse structurante est choisie dans le groupe consistant en l'huile de palme et des fractions d'huile de palme.

10. Mélange de matières grasses végétales suivant la revendication 9, dans lequel la matière structurante est une fraction moyenne d'huile de palme ayant un indice d'iode de 37 à 45.

11. Mélange de matières grasses végétales suivant l'une quelconque des revendications précédentes, ayant une teneur en acides gras trans-insaturés inférieure à 2 % en poids.

12. Produit comestible ayant une teneur en matières grasses d'au moins 15 % en poids de matière sèche, ladite matière grasse consistant en 0 à 40 % en poids de matière grasse laitière et 60 à 100 % en poids du mélange de matières grasses végétales défini dans l'une quelconque des revendications précédentes.

13. Produit comestible suivant la revendication 12, ledit produit comestible étant choisi dans le groupe consistant en le fromage, le lait, la crème, la matière grasse de boulangerie, la margarine de boulangerie, la crème glacée, des desserts, des laits frappés et le produit de blanchiment du café.

14. Produit comestible suivant la revendication 13, ledit produit comestible étant un produit laitier d'imitation ayant une teneur en matières grasses de 15 à 95 %, avantageusement de 25 à 65 % et encore plus avantageusement de 35 à 55 % en poids de matière sèche.

15. Produit comestible suivant la revendication 14, dans lequel le produit d'imitation est un produit d'imitation du type du fromage.
